# DEMANDE DE BREVET EUROPEEN

(11) **EP 2 594 176 A1**
(43) Date de publication de la demande: **22.05.2013**
(21) Numéro de dépôt: 11306508.0
(22) Date de dépôt: 17.11.2011
(51) Int. Cl.: A47J 42/10

(54) **Mécanisme et dispositif pour broyer des condiments, notamment des grains de poivre**

(71) Demandeur: Birambeau, 75012 Paris (FR)
(72) Inventeur: Borel, Christian, 75012 Paris (FR)
(74) Mandataire: Bonnet, Michel

(57) **Abrégé**

Ce mécanisme de broyage, pour dispositif (10) de broyage de condiments, notamment du poivre, du sel ou des baies, comporte une paire d'élément mâle intérieur (26) et d'élément femelle extérieur (38) de broyage, l'élément mâle intérieur (26) présentant une paroi externe coopérant, par rotation relative de l'élément mâle intérieur et de l'élément femelle extérieur, avec une paroi interne de l'élément femelle extérieur (38) pour le broyage des condiments dans un espace (40) réservé entre lesdites parois externe et interne.

L'élément mâle intérieur (26) présente en outre une cavité (28) destinée à recevoir les condiments, cette cavité (28) étant percée d'au moins un trou (34) et présentant au moins une rampe (36) d'amenée de condiments à travers ce trou (34) dans l'espace (40) réservé entre la paroi externe de l'élément mâle intérieur (26) et la paroi interne de l'élément femelle extérieur (38).

## Description

La présente invention concerne un mécanisme pour broyer des condiments, notamment des grains de poivre, du sel ou des baies. Elle concerne également un dispositif intégrant un tel mécanisme.

Elle s'applique plus particulièrement à un mécanisme de broyage comportant une paire d'élément mâle intérieur et d'élément femelle extérieur de broyage, l'élément mâle intérieur présentant une paroi externe coopérant, par rotation relative de l'élément mâle intérieur et de l'élément femelle extérieur, avec une paroi interne de l'élément femelle extérieur pour le broyage des condiments dans un espace réservé entre lesdites parois externe et interne.

Un tel mécanisme est en général intégré dans un dispositif complet comportant en outre un réservoir à condiments à la base duquel est placé le mécanisme, ce dispositif étant alors appelé moulin à condiments, notamment moulin à poivre.

Un exemple de moulin à poivre est décrit dans le brevet français publié sous le numéro FR 2 917 589. Ce moulin à poivre présente un mécanisme de broyage comportant :
- un stator annulaire, formant l'élément femelle extérieur de broyage, fixé axialement et radialement sur la base d'un réservoir à poivre, et
- un rotor, formant l'élément mâle intérieur de broyage, fixé axialement et radialement, tout en étant réglable en position axiale, dans un tambour libre en rotation sur la base du réservoir.

L'espace réservé entre les parois externe et interne du rotor et du stator est en communication directe avec le fond du réservoir pour recevoir et broyer les grains de poivre sous l'effet de leur poids lorsque le moulin est disposé de telle sorte que le réservoir est placé au dessus du mécanisme de broyage. Le poivre moulu s'échappe alors vers l'extérieur sous le mécanisme de broyage.

En pratique, le stator doit présenter au moins une denture complexe pour que les grains de poivre s'engagent correctement dans l'espace réservé de broyage. Dans l'exemple du brevet FR 2 917 589, la paroi interne du stator comporte ainsi une première denture large dans sa partie, dite haute, au contact du fond du réservoir et une seconde denture fine dans sa partie, dite basse, au contact de l'extérieur du moulin. La denture large en partie haute, adaptée à la taille des grains à broyer, facilite l'engagement de ces derniers dans l'espace réservé de broyage tandis que la denture fine en partie basse est prévue spécifiquement pour le broyage. En outre, ces dentures doivent être inclinées radialement pour faciliter l'entraînement des grains dans l'espace réservé de broyage, dans un sens privilégié de rotation. Par ailleurs, la paroi externe du rotor est également pourvue de dentures complexes coopérant avec les dentures du stator.

D'autres exemples de mécanismes, celui décrit dans la demande de brevet publiée sous le numéro US 2009/0134255, celui décrit dans le brevet français publié sous le numéro FR 2 912 634 ou celui décrit dans la demande de brevet français publiée sous le numéro FR 2 424 012, reprennent ce principe général. Ils proposent même de prévoir deux dépouilles opposées de dentures différentes dans la paroi interne de l'élément femelle extérieur : la dépouille supérieure, aux dents larges ou munie de larges saillies, est prévue pour entraîner les grains de poivre vers la dépouille inférieure, alors que la dépouille inférieure, aux dents plus fines, est prévue pour broyer les grains de poivre en coopération avec la paroi externe de l'élément mâle intérieur.

Dans tous les cas précités, la conception et la fabrication des éléments femelles extérieurs est complexe et coûteuse, même s'il est prévu une économie de fabrication dans le document FR 2 424 012 en prévoyant deux pièces distinctes pour constituer l'élément femelle extérieur.

Il peut donc être souhaité de définir un mécanisme de broyage qui soit plus simple de conception donc moins coûteux à fabriquer.

L'invention a ainsi pour objet un mécanisme de broyage, pour dispositif de broyage de condiments, notamment du poivre, du sel ou des baies, comportant une paire d'élément mâle intérieur et d'élément femelle extérieur de broyage, l'élément mâle intérieur présentant une paroi externe coopérant, par rotation relative de l'élément mâle intérieur et de l'élément femelle extérieur, avec une paroi interne de l'élément femelle extérieur pour le broyage des condiments dans un espace réservé entre lesdites parois externe et interne, caractérisé en ce que l'élément mâle intérieur présente une cavité destinée à recevoir les condiments, cette cavité étant percée d'au moins un trou et présentant au moins une rampe d'amenée de condiments à travers ce trou dans l'espace réservé entre la paroi externe de l'élément mâle intérieur et la paroi interne de l'élément femelle extérieur.

Ainsi, dans le nouveau mécanisme proposé, c'est l'aménagement d'une cavité formée dans l'élément mâle intérieur qui remplit la fonction d'entraînement des condiments à broyer dans l'espace réservé de broyage, celui-ci n'étant d'ailleurs plus nécessairement en contact direct avec le fond d'un réservoir à condiments. La paroi interne de l'élément femelle extérieur de broyage est alors grandement simplifiée puisqu'elle n'a plus pour fonction que de broyer les condiments en coopération avec la paroi externe de l'élément mâle intérieur. Il n'est en particulier plus nécessaire de prévoir deux dépouilles opposées. Par ailleurs, en ce qui concerne l'élément mâle intérieur, ses fonctions d'entraînement et de broyage des condiments sont nettement séparées parce qu'essentiellement remplies par des parois différentes : celle de la cavité pour l'entraînement et sa paroi externe pour le broyage. Sa fabrication s'en trouve donc également simplifiée et moins coûteuse.

De façon optionnelle, l'élément femelle extérieur est pourvu d'au moins un trou latéral pour l'extraction, vers l'extérieur du mécanisme, de condiments broyés dans l'espace réservé entre la paroi externe de l'élément mâle intérieur et la paroi interne de l'élément femelle extérieur.

De façon optionnelle également, la paroi interne de l'élément femelle extérieur est de section générale circulaire et présente un axe de symétrie parallèle et décalé par rapport à l'axe de rotation relative de l'élément mâle intérieur et de l'élément femelle extérieur.

De façon optionnelle également, l'élément femelle extérieur est pourvu d'au moins deux trous latéraux pour l'extraction des condiments broyés, par exemple deux trous latéraux diamétralement opposés.

De façon optionnelle également, la cavité de l'élément mâle intérieur est percée de trois trous et présente trois rampes d'amenée des condiments à travers ces trous, les trois trous et rampes étant équirépartis radialement autour de l'axe de rotation relative de l'élément mâle intérieur et de l'élément femelle extérieur.

De façon optionnelle également, la paroi externe de l'élément mâle intérieur et la paroi interne de l'élément femelle extérieur présentent des dentures droites.

De façon optionnelle également, la paroi externe de l'élément mâle intérieur présente en outre un méplat autour de chaque trou.

De façon optionnelle également, un mécanisme de broyage selon l'invention peut comporter un arbre de positionnement autour de l'axe de rotation relative et une bague autour de cet arbre, l'arbre étant partiellement logé dans l'élément mâle intérieur et dans l'élément femelle extérieur, l'arbre et la bague étant moulés dans une matière plastique dure et alimentaire autolubrifiante tel que du PolyOxyMéthylène ou du PolyAmide.

L'invention a également pour objet un dispositif pour broyer des condiments, notamment du poivre, du sel ou des baies, comportant un réservoir à condiments au fond duquel est adapté un mécanisme de broyage des condiments selon l'invention, ce mécanisme de broyage étant disposé de sorte que la cavité de l'élément mâle intérieur soit ouverte sur le fond du réservoir pour recevoir les condiments.

De façon optionnelle, un dispositif pour broyer des condiments selon l'invention peut en outre comporter une base recevant une portion inférieure du réservoir, la base et le réservoir étant munis de moyens complémentaires de fixation axiale du réservoir dans la base permettant toutefois une rotation relative du réservoir et de la base autour d'un axe longitudinal principal du dispositif, et :
- la portion inférieure du réservoir et l'élément mâle intérieur sont munis de moyens coopératifs d'entraînement en rotation de l'élément mâle intérieur par le réservoir autour de l'axe longitudinal principal, et
- la base et l'élément femelle extérieur sont munis de moyens coopératifs d'entraînement en rotation de l'élément femelle extérieur par la base autour de l'axe longitudinal principal.

L'invention sera mieux comprise à l'aide de la description qui va suivre, donnée uniquement à titre d'exemple et faite en se référant aux dessins annexés dans lesquels :
- la figure 1 représente schématiquement en coupe longitudinale les différents éléments d'un dispositif pour broyer des condiments selon un mode de réalisation de l'invention,
- les figures 2 et 3 représentent en perspective éclatée, vus de dessous et vus de dessus, les différents éléments d'un mécanisme de broyage du dispositif de la figure 1, et
- les figures 4 et 5 illustrent de façon détaillée selon deux coupes axiales le mécanisme de broyage des figures 2 et 3 intégré dans le dispositif de la figure 1.

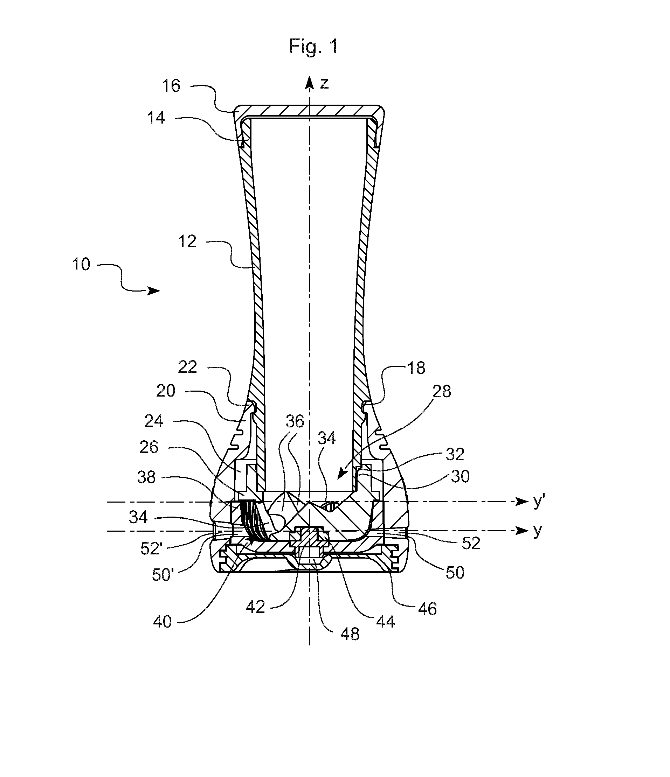

Le dispositif 10 pour broyer des condiments, représenté en coupe longitudinale sur la figure 1 dans un plan (y, z), comporte plusieurs éléments assemblés les uns aux autres. Il s'agit, à titre d'exemple non limitatif, d'un moulin à poivre utilisant le principe de broyage des grains de poivre dans un espace réservé entre la paroi externe d'un élément mâle intérieur de broyage et la paroi interne d'un élément femelle extérieur de broyage.

Ce moulin à poivre 10 comporte un réservoir 12 de forme générale cylindrique s'étendant le long d'un axe principal z de rotation. Le réservoir 12 est éventuellement légèrement cintré dans sa portion médiane, permettant ainsi une meilleure préhension. Il est en outre par exemple moulé dans une matière plastique rigide alimentaire transparente pour un meilleur suivi de la quantité de grains de poivre restant à moudre.

Dans sa portion supérieure, le réservoir 12 présente une gorge ou un rétrécissement de diamètre 14 permettant l'emboîtage élastique d'un bouchon 16 pour, lorsqu'il est ôté, introduire des grains de poivre dans le réservoir 12 et, lorsqu'il est fixé, les y maintenir. Dans sa portion inférieure, il présente également une autre gorge 18, plus marquée, pour l'emboîtage élastique d'une base creuse 20 autour de cette portion inférieure du réservoir 12, le fond du réservoir s'ouvrant alors dans l'espace intérieur de la base 20.

A cet effet et plus précisément, la base 20 comporte dans la paroi interne de sa portion supérieure un renflement circulaire 22 coopérant avec la gorge 18 pour une fixation axiale du réservoir 12 dans la base 20 permettant toutefois une rotation relative du réservoir 12 et de la base 20 autour de l'axe principal z. Ainsi, en maintenant la base 20 d'une main et le réservoir 12 dans sa portion médiane d'une autre main, un utilisateur peut actionner le moulin à poivre 10 en imprimant un mouvement de rotation relative entre la base 20 et le réservoir 12. La base 20 s'étend par ailleurs au-delà du fond du réservoir 12 de manière à présenter une chambre 24 dans laquelle est disposé un mécanisme de broyage.

Le mécanisme de broyage comporte un élément mâle intérieur 26 de broyage. Cet élément mâle intérieur 26 présente une cavité 28 comportant en partie supérieure un alésage recevant l'extrémité inférieure du réservoir 12. La cavité 28 est ainsi ouverte sur le fond du réservoir 12 et destinée à recevoir les grains de poivre lorsque le moulin à poivre 10 est correctement positionné comme sur la figure 1 (i.e. le réservoir 12 au dessus de l'élément mâle intérieur 26). L'extrémité inférieure du réservoir 12 et l'élément mâle intérieur 26 sont en outre munis de moyens coopératifs d'entraînement en rotation de l'élément mâle intérieur 26 par le réservoir 12 autour de l'axe principal z. Ces moyens coopératifs sont par exemple constitués de languettes 30 formées dans la paroi interne de l'élément mâle intérieur 26, en partie supérieure de la cavité 28, et de rainures correspondantes 32 dans la paroi externe du réservoir 12 à son extrémité inférieure. Trois paires de languettes/rainures parallèles à l'axe principal z peuvent être prévues, équiréparties à 120 degrés autour de l'axe z.

La partie inférieure de la cavité 28 est percée latéralement d'au moins un trou 34 traversant l'épaisseur de l'élément mâle intérieur 26 et le fond de la cavité 28 présente au moins une rampe 36 d'amenée de condiments à travers ce trou 34. Plus précisément, dans l'exemple illustré sur la figure 1, la cavité 28 comporte trois trous latéraux 34 et trois rampes correspondantes 36, équirépartis à 120 degrés autour de l'axe principal z, chaque rampe 36 s'étendant, en pente descendante, depuis l'axe principal z jusque vers le trou latéral 34 correspondant. Ainsi, l'élément mâle intérieur 26 a la forme générale d'une buse disposée au fond du réservoir 12 guidant la transmission des grains de poivre dans le mécanisme de broyage. Son diamètre extérieur maximal est par exemple d'environ 2 cm.

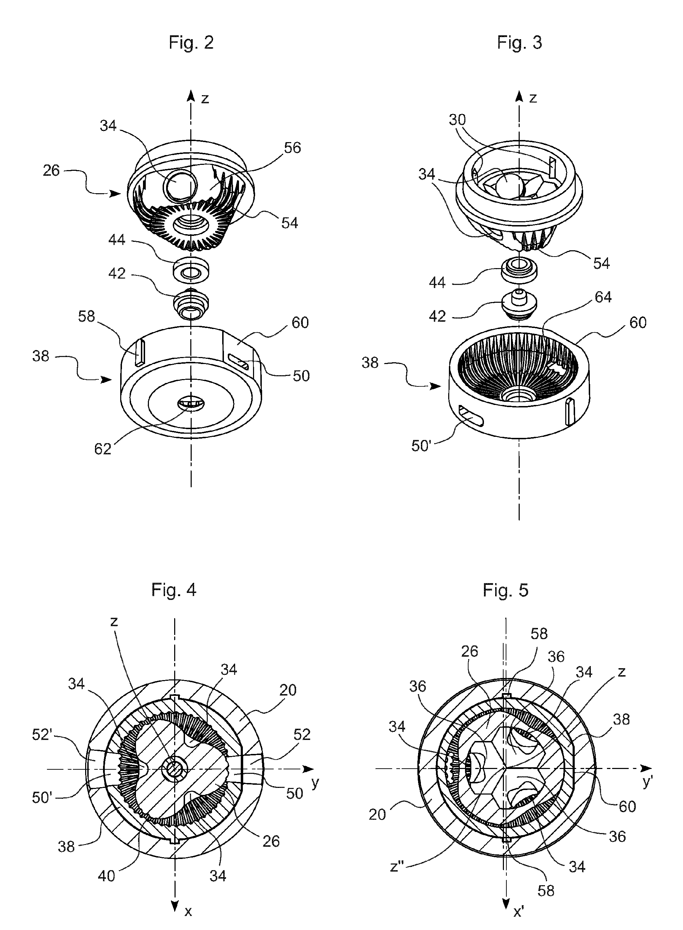

Le mécanisme de broyage comporte en outre un élément femelle extérieur 38 de broyage dont la paroi interne coopère, par rotation relative de l'élément mâle intérieur 26 et de l'élément femelle extérieur 38, avec la paroi externe de l'élément mâle intérieur 26 pour le broyage des grains de poivre dans un espace 40 réservé entre ces parois interne et externe. Une correspondance des formes de la paroi externe de l'élément mâle 26, d'une part, et de la paroi interne de l'élément femelle 38, d'autre part, ainsi que la présence de dentures sur au moins une partie de ces parois interne et externe, assurent le broyage des grains de poivre. Ces éléments seront précisés en référence aux figures 2 et 3. La base 20 et l'élément femelle extérieur 38 sont en outre munis de moyens coopératifs d'entraînement en rotation de l'élément femelle extérieur 38 par la base 20 autour de l'axe principal z. Ces moyens coopératifs sont par exemple constitués de languettes et éventuellement d'un méplat (non représentés sur la figure 1 mais visibles sur les figures 2 à 5), formés dans la paroi externe de l'élément femelle extérieur 38, et de rainures et éventuellement d'un méplat (non représentés sur la figure 1 mais visibles sur les figures 4 et 5) correspondants dans la paroi interne de la base 20.

Ainsi, la rotation relative de l'élément mâle intérieur 26 et de l'élément femelle extérieur 38 est assurée par un actionnement du moulin à poivre 10 réalisé en imprimant une rotation relative entre le réservoir 12 et la base 20 autour de l'axe principal z, comme précédemment indiqué. Par ailleurs, en fonction des matériaux utilisés pour l'élément mâle intérieur 26 et l'élément femelle extérieur 38 du mécanisme de broyage (par exemple de la céramique, ou tout autre matériau apte à remplir une fonction de broyage dans l'application alimentaire envisagée), il peut être avantageux voire nécessaire de prévoir la matérialisation de l'axe principal z par un arbre de positionnement 42. Cet arbre de positionnement 42 est partiellement logé, à l'aide d'une bague 44 facilitant la libre rotation de l'élément mâle intérieur 26 autour de l'axe principal z, dans la partie centrale (i.e. centrée sur l'axe z) du fond de ce dernier. Il est en outre également partiellement logé dans la partie centrale du fond de l'élément femelle extérieur 38. L'arbre de positionnement 42 et sa bague 44 permettent ainsi éventuellement d'éviter un contact direct entre l'élément mâle intérieur 26 et l'élément femelle extérieur 38. Ils sont avantageusement moulés dans une matière plastique dure et alimentaire telle que du PolyOxyMéthylène (POM) ou du PolyAmide (PA), ces matériaux présentant en outre la particularité d'être autolubrifiants et sans frottement sensible.

Enfin, le moulin à poivre 10 comporte un couvercle circulaire 46, vissé dans le fond de la base 20 de manière à protéger la chambre 24 et en particulier le mécanisme de broyage qu'elle contient, tout en permettant ainsi un accès pour une intervention ou un nettoyage quelconque. Ce couvercle circulaire 46 peut en outre comporter en son centre un logement 48 destiné à recevoir l'extrémité inférieure de l'arbre 42 pour son maintien ferme sur l'axe z.

Une autre fonction du couvercle circulaire 46 est, en coopération avec l'extrémité inférieure du réservoir 12, de verrouiller les positions de l'élément mâle intérieur 26 et de l'élément femelle extérieur 38 le long de l'axe principal z pour assurer un broyage précis et performant des grains de poivre. Plus précisément, l'extrémité inférieure du réservoir 12 vient buter contre un retour prévu dans l'alésage en partie supérieure de la cavité 28 de l'élément mâle intérieur 26. Dans l'autre sens, le couvercle circulaire 46 vient buter, par vissage dans le fond de la base 20, contre l'élément femelle extérieur 38, le positionnant ainsi axialement précisément contre l'élément mâle intérieur 26. Un jeu précis de quelques dixièmes de millimètre, par exemple 2/10^{e} de millimètre, suffit pour assurer ce verrouillage de positions axiales tout en permettant une rotation relative des éléments mâle 26 et femelle 38. En outre, le positionnement par vissage du couvercle circulaire 46 permet éventuellement de régler encore plus finement ce verrouillage axial.

L'espace de broyage 40 réservé entre la paroi externe de l'élément mâle intérieur 26 et la paroi interne de l'élément femelle extérieur 38 permet de broyer plus ou moins finement les grains de poivre. Ceux-ci doivent ensuite pouvoir être évacués à l'extérieur du moulin à poivre 10. Pour cela, l'élément femelle extérieur 38 est percé d'au moins un trou 50, et la base 20 d'au moins un trou 52 disposé en vis-à-vis du trou 50, ouvrant une communication entre l'espace de broyage 40 et l'extérieur du moulin à poivre 10. Plus précisément, dans l'exemple de la figure 1, l'élément femelle extérieur 38 est percé de deux trous 50 et 50' diamétralement opposés et latéraux, la base étant également percée de deux trous 52 et 52' diamétralement opposés, latéraux et disposés en vis-à-vis respectifs des deux trous 50 et 50'.

Le mécanisme de broyage complet, constitué de l'élément mâle intérieur 26, de l'élément femelle extérieur 38, de l'arbre de positionnement 42 et de la bague 44 est détaillé en perspective éclatée vue de dessous sur la figure 2. Selon cette représentation, la paroi externe de l'élément mâle intérieur 26 est bien visible. Elle comporte des dentures fines 54 de section trapézoïdale et trois méplats 56 formés autour de chaque trou 34 qui lui donnent ainsi une section en forme de came. Les dentures fines 54 sont en outre radialement droites.

Sur cette figure, une languette 58 et un méplat 60 formés dans la paroi externe de l'élément femelle extérieur 38 sont également visibles. Le méplat 60 est formé autour du trou 50. Enfin, le fond de l'élément femelle extérieur 38 est percé d'un trou 62 destiné à loger partiellement l'arbre de positionnement 42.

Le mécanisme de broyage complet est détaillé en perspective éclatée vue de dessus sur la figure 3. Selon cette représentation, la paroi interne de l'élément femelle extérieur 38 est bien visible. Elle comporte des dentures fines 64 de section trapézoïdale et présente la forme générale d'un mortier. Les dentures fines 64 sont en outre radialement droites.

Le principe de broyage est alors le suivant. Les grains de poivre présents dans la cavité 28 au fond du réservoir 12 sont conduits par les rampes 36 à travers les trous latéraux 34 de diamètre suffisant pour les laisser passer. Ils accèdent ainsi à l'espace de broyage 40 là où il est le plus large grâce aux méplats 56 formés autour de chaque trou 34. De préférence, l'espace de broyage 40 est à cet endroit suffisamment large pour contenir un grain de poivre complet (minimum 7 mm). Les grains de poivre sont retenus par les dentures fines 64 de la paroi interne de l'élément femelle extérieur 38 mais glissent sur les méplats 56 en cas de rotation relative, dans un sens quelconque étant donné que les dentures sont droites, de l'élément mâle intérieur 26 et de l'élément femelle extérieur 38. Par un effet de came obtenu grâce à cette rotation relative, les grains de poivre sont alors broyés entre la paroi externe de l'élément mâle intérieur 26 et la paroi interne de l'élément femelle extérieur 38, puis sont dirigés par les dentures fines 54 coopérant avec les dentures 64 vers l'un des trous 50 et 50'. La finesse du broyage est déterminée par l'espace résiduel laissé entre les dentures fines 54 et 64.

Comme illustré sur les figures 4 et 5 en coupes axiales, la section circulaire dentée de la paroi interne de l'élément femelle extérieur 38 peut être désaxée par rapport à la section circulaire dentée de la paroi externe de l'élément mâle intérieur 26. Ainsi, indépendamment des méplats 56 qui créent une forme de came pour le broyage des grains de poivre, l'espace résiduel laissé entre les dentures fines 54 et 64 n'est pas constant. Notamment, il est minimal au voisinage du trou 50 alors qu'il est maximal au voisinage du trou 50'. Ainsi, selon l'orientation que l'on donne au moulin à poivre lorsqu'on lui imprime la rotation relative souhaitée, par l'effet de pesanteur les grains broyés seront de tailles différentes. En particulier, ils seront très fins s'ils sont dirigés vers le trou 50 lorsque l'on penche le moulin à poivre 10 du côté de ce trou et ils seront plus grossiers s'ils sont dirigés vers l'autre trou 50' lorsque l'on penche le moulin à poivre 10 du côté de cet autre trou. On remarque par ailleurs que puisque les dentures 54 et 64 ne sont pas penchées radialement, il n'y a aucun sens de rotation privilégié. Ainsi, les grains de poivre peuvent être avantageusement broyés en imprimant un mouvement de rotation en va-et-vient et en penchant le moulin à poivre du côté du trou d'évacuation souhaité selon la taille voulue des grains broyés.

La figure 4 illustre plus précisément une coupe du mécanisme de broyage selon un plan axial (x, y) perpendiculaire au plan longitudinal (y, z) indiqué sur la figure 1. Cette illustration met en évidence la variation de l'espace de broyage 40 autour de l'axe z et le positionnement des trous 50 et 50' (et donc également des trous 52 et 52') dans des zones diamétralement opposées d'espaces de broyage minimal et maximal.

La figure 5 illustre plus précisément une coupe dans un autre plan (x', y') perpendiculaire au plan longitudinal (y, z) indiqué sur la figure 1. Dans ce plan, situé au dessus du plan (x, y) et parallèle à ce dernier, la forme de came de l'élément mâle intérieur 26 est mise en évidence. De même, le léger décalage entre l'axe principal z, autour duquel est imprimée la rotation relative entre l'élément mâle intérieur 26 et l'élément femelle extérieur 38, et l'axe z" autour duquel est centrée la paroi dentée interne de l'élément femelle extérieur 38 y est bien visible. Notamment, on voit que l'espace de broyage 40 est tellement réduit face aux trous 50 et 52 (à l'endroit du méplat 60) que le poivre sort sous forme de poudre de ce côté du moulin à poivre 10, alors qu'il sort sous forme de concassures plus grossières de l'autre côté.

Il apparaît clairement qu'un dispositif pour broyer des condiments tel que celui décrit précédemment présente un mécanisme de broyage performant, astucieux (notamment par la possibilité de broyer plus ou moins finement les condiments) et simple à fabriquer. Par ailleurs, l'accès des condiments à l'espace de broyage étant facilité, il n'est plus nécessaire de prévoir des dentures inclinées radialement comme c'est généralement le cas dans les dispositifs connus de l'état de la technique. Par conséquent il n'y a plus de contrainte liée à un sens de broyage privilégié. En outre, le fait d'évacuer latéralement les condiments broyés permet de prévoir une protection du mécanisme de broyage sous le dispositif à l'aide d'un couvercle.

On notera par ailleurs que l'invention n'est pas limitée au mode de réalisation décrit précédemment.

Diverses variantes de réalisation peuvent être en effet envisagées dans le cadre de l'invention. Notamment, le nombre de trous d'évacuation peut être augmenté pour augmenter le nombre de tailles possibles des condiments broyés, la forme relative des parois externe et interne des éléments mâle et femelle de broyage peut être adaptée à l'application visée, le nombre de trous prévus dans l'élément mâle peut également être modulé, etc.

Plus généralement, il apparaîtra à l'homme de l'art que diverses modifications peuvent être apportées au mode de réalisation décrit ci-dessus, à la lumière de l'enseignement qui vient de lui être divulgué. Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

## Revendications

1. Mécanisme de broyage, pour dispositif (10) de broyage de condiments, notamment du poivre, du sel ou des baies, comportant une paire d'élément mâle intérieur (26) et d'élément femelle extérieur (38) de broyage, l'élément mâle intérieur (26) présentant une paroi externe coopérant, par rotation relative de l'élément mâle intérieur et de l'élément femelle extérieur, avec une paroi interne de l'élément femelle extérieur (38) pour le broyage des condiments dans un espace (40) réservé entre lesdites parois externe et interne, **caractérisé en ce que** l'élément mâle intérieur (26) présente une cavité (28) destinée à recevoir les condiments, cette cavité (28) étant percée d'au moins un trou (34) et présentant au moins une rampe (36) d'amenée de condiments à travers ce trou (34) dans l'espace (40) réservé entre la paroi externe de l'élément mâle intérieur (26) et la paroi interne de l'élément femelle extérieur (38).

2. Mécanisme de broyage selon la revendication 1, dans lequel l'élément femelle extérieur (38) est pourvu d'au moins un trou latéral (50, 50') pour l'extraction, vers l'extérieur du mécanisme, de condiments broyés dans l'espace (40) réservé entre la paroi externe de l'élément mâle intérieur (26) et la paroi interne de l'élément femelle extérieur (38).

3. Mécanisme de broyage selon la revendication 1 ou 2, dans lequel la paroi interne de l'élément femelle extérieur (38) est de section générale circulaire et présente un axe de symétrie (z") parallèle et décalé par rapport à l'axe (z) de rotation relative de l'élément mâle intérieur (26) et de l'élément femelle extérieur (38).

4. Mécanisme de broyage selon les revendications 2 et 3, dans lequel l'élément femelle extérieur (38) est pourvu d'au moins deux trous latéraux (50, 50') pour l'extraction des condiments broyés, par exemple deux trous latéraux diamétralement opposés.

5. Mécanisme de broyage selon l'une quelconque des revendications 1 à 4, dans lequel la cavité (28) de l'élément mâle intérieur (26) est percée de trois trous (34) et présente trois rampes (36) d'amenée des condiments à travers ces trous, les trois trous et rampes étant équirépartis radialement autour de l'axe (z) de rotation relative de l'élément mâle intérieur (26) et de l'élément femelle extérieur (38).

6. Mécanisme de broyage selon l'une quelconque des revendications 1 à 5, dans lequel la paroi externe de l'élément mâle intérieur (26) et la paroi interne de l'élément femelle extérieur (38) présentent des dentures droites (54, 64).

7. Mécanisme de broyage selon la revendication 6, dans lequel la paroi externe de l'élément mâle intérieur (26) présente en outre un méplat (56) autour de chaque trou (34).

8. Mécanisme de broyage selon l'une quelconque des revendications 1 à 7, comportant un arbre (42) de positionnement autour de l'axe (z) de rotation relative et une bague (44) autour de cet arbre, l'arbre (42) étant partiellement logé dans l'élément mâle intérieur (26) et dans l'élément femelle extérieur (38), l'arbre (42) et la bague (44) étant moulés dans une matière plastique dure et alimentaire autolubrifiante tel que du PolyOxyMéthylène ou du PolyAmide.

9. Dispositif (10) pour broyer des condiments, notamment du poivre, du sel ou des baies, comportant un réservoir (12) à condiments au fond duquel est adapté un mécanisme de broyage des condiments selon l'une quelconque des revendications 1 à 8, ce mécanisme de broyage étant disposé de sorte que la cavité (28) de l'élément mâle intérieur (26) soit ouverte sur le fond du réservoir (12) pour recevoir les condiments.

10. Dispositif (10) pour broyer des condiments selon la revendication 9, comportant en outre une base (20) recevant une portion inférieure du réservoir (12), la base (20) et le réservoir (12) étant munis de moyens complémentaires (18, 22) de fixation axiale du réservoir (12) dans la base (20) permettant toutefois une rotation relative du réservoir (12) et de la base (20) autour d'un axe longitudinal principal (z) du dispositif, et dans lequel :
- la portion inférieure du réservoir (12) et l'élément mâle intérieur (26) sont munis de moyens coopératifs (30, 32) d'entraînement en rotation de l'élément mâle intérieur (26) par le réservoir (12) autour de l'axe longitudinal principal (z), et
- la base (20) et l'élément femelle extérieur (38) sont munis de moyens coopératifs (58, 60) d'entraînement en rotation de l'élément femelle extérieur (38) par la base (20) autour de l'axe longitudinal principal (z).
